# FASCICULE DE BREVET EUROPEEN

(11) **EP 1 672 563 B1**
(45) Date de publication et mention de la délivrance du brevet: **10.10.2007**
(21) Numéro de dépôt: 04029823.4
(22) Date de dépôt: 16.12.2004
(51) Int. Cl.: G06K 7/10, G06K 19/07, H01L 27/02

(54) **Transpondeur à très haute fréquence, notamment UHF, comprenant une protection contre les décharges électrostatiques**
Radiofrequenz-Transponder, insbesondere für UHF, mit einer ESD-Schutzschaltung
Radio frequency transponder, in particular for UHF, comprising an ESD-protection circuit

(43) Date de publication de la demande: 21.06.2006
(73) Titulaire: EM Microelectronic-Marin SA, 2074 Marin (CH)
(72) Inventeur: Pardoen, Matthijs, 2525 Le Landeron (CH)
(74) Mandataire: Surmely, Gérard

(56) Documents cités:
- WO-A1-02/27650
- WO-A1-20/04107077
- WO-A2-96/38805
- GB-A- 2 330 957
- US-A- 5 815 355
- US-B2- 6 549 064

## Description

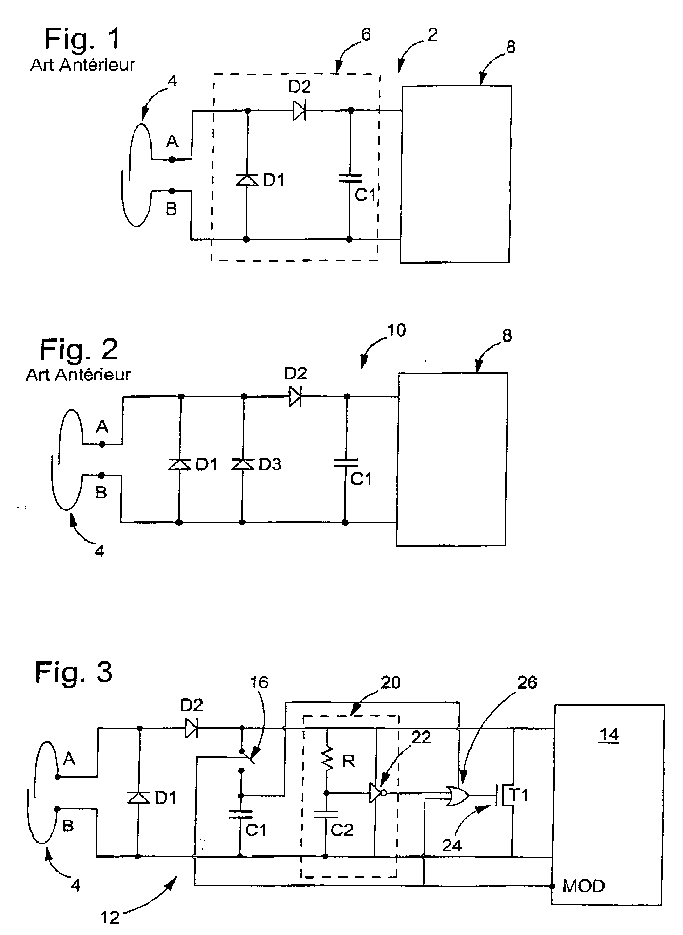

La présente invention concerne les transpondeurs à très haute fréquence, en particulier les transpondeurs passifs fonctionnant dans le domaine UHF. Comme représenté à la figure 1 de tels transpondeurs 2 comprennent généralement une antenne ouverte 4 reliée à deux bornes A et B d'un circuit intégré formé par un circuit redresseur 6 en entrée et par un circuit 8 situé en aval de la capacité d'alimentation C1 du circuit 6. Le circuit 8 comprend notamment le circuit logique du transpondeur et un transistor de modulation commandé par ce circuit logique pour générer des signaux de réponse par modulation du champ électromagnétique fourni par un lecteur.

Le redresseur 6 du transpondeur UHF 2 de la figure 1 est formé par deux diodes D1 et D2 et par la capacité C1. La diode D1 est agencée en parallèle avec la diode D2 et la capacité C1 entre les bornes d'entrée A et B du circuit intégré. Un tel redresseur, dans le cas d'un transpondeur UHF, permet de charger la capacité C1 à une tension proche de celle définie par le signal électromagnétique reçu entre ses deux valeurs de crête.

En définissant la borne A comme borne positive et la borne B comme borne négative, un courant positif circule donc dans le circuit intégré entre la borne A et la borne B. Nous conserverons cette définition pour la suite.

Le transpondeur 2, représenté à la figure 1, présente un problème de protection contre les décharges électrostatiques (ESD), plus particulièrement dans le cas où le courant de décharge est positif (V_{A}> V_{B}). En effet, dans le cas d'un courant négatif, la diode D1 est conductrice de sorte que le courant peut circuler au travers de cette diode jusqu'à une valeur relativement élevée sans qu'il y ait de dommage dû à la dissipation d'énergie ; et ceci même si la diode D1 a de petites dimensions. Par contre, dans le cas d'un courant positif lors d'une décharge électrostatique, la diode D1 bloque le passage du courant jusqu'à sa tension de claquage, par exemple entre 5 V et 10 V en valeur absolue. Deux problèmes surviennent dans ce dernier cas. Premièrement, le fort courant de décharge détruit souvent le circuit 8 avant que la diode D1 ne laisse passer le courant. Ensuite, si la diode est de petites dimensions, elle ne peut pas absorber une puissance correspondant au courant de décharge multiplié par la tension de claquage de cette diode. Par conséquent, le transpondeur est généralement détruit par une décharge électrostatique positive.

Pour obtenir un redresseur efficace, les diodes D1 et D2 sont de préférence de petites diodes shottky. Pour résoudre le problème susmentionné on a proposé le transpondeur 10 représenté à la figure 2 dans lequel une diode D3 est agencée en parallèle avec la diode D1. Cette diode D3 présente de relativement grandes dimensions avec une faible impédance. La diode D3 influence peu le circuit redresseur et elle est prévue avec une tension de claquage inférieure à celle de la diode D1, de préférence proche de la tension de fonctionnement du circuit intégré mais supérieure à cette dernière.

Le transpondeur 10 présente cependant des désavantages. Premièrement la protection ESD est relativement faible car il est difficile de définir précisément la tension de claquage de la diode D3, cette tension étant notamment dépendante de la technologie de fabrication du circuit intégré. Un autre désavantage majeur provient du fait que la diode D3 augmente de manière significative la capacité d'entrée du circuit intégré, ce qui augmente l'énergie dissipée par ce circuit et diminue la tension aux bornes de la capacité d'alimentation C1. Ceci a pour conséquence négative une diminution de la distance de communication à un lecteur donné.

US 5815355 A décrit un transpondeur comprenant une antenne, un circuit redresseur, un circuit logique, un transistor de modulation et un transistor de protection contre des surtensions.

Le but de la présente invention est de proposer un transpondeur du type décrit ci-avant muni d'une protection contre les décharges électrostatiques (protection ESD) qui ne présente pas les inconvénients susmentionnés.

A cet effet, la présente invention concerne un transpondeur du type susmentionné dans lequel les moyens de protection ESD sont formés par le transistor de modulation et par des moyens de commande additionnels de ce transistor agencés pour le mettre dans son état conducteur lorsqu'un courant de décharge électrostatique sort du circuit redresseur en direction du circuit logique.

Ainsi, le transistor de modulation a deux fonctions distinctes, à savoir sa fonction première de modulation de signaux de réponse à un lecteur et une deuxième fonction de protection ESD du transpondeur. Pour assurer efficacement cette protection ESD, il est nécessaire d'avoir un transistor avec des dimensions caractéristiques relativement grandes. Or le transistor de modulation, pour assurer sa fonction première de modulation, présente généralement de telles dimensions. Il résulte de l'invention une bonne protection ESD du transpondeur sans avoir à agencer un élément supplémentaire de relativement grande dimension. De plus, cette solution permet d'obtenir une bonne protection ESD sans augmenter la capacité d'entrée du circuit intégré du transpondeur.

La présente invention est décrite en référence au dessin annexé dans lequel :
- la figure 1, déjà décrite, montre schématiquement un transpondeur UHF avec son circuit redresseur comme connu de l'état de la technique,
- la figure 2, déjà décrite, montre un transpondeur du type de la figure 1 muni d'une diode supplémentaire de protection ESD comme connu de l'état de la technique;
- la figure 3 montre schématiquement un mode de réalisation de la présente invention.

L'invention sera donc décrite ci-après de manière détaillée et non limitative à l'aide de la figure 3.

Le transpondeur 12 de la figure 3 comprend une antenne ouverte 4 et un circuit redresseur formé de deux diodes D1 et D2 et d'une capacité d'alimentation C1. On notera que le redresseur peut présenter un autre agencement et notamment comprendre en outre un élévateur de tension. Ce transpondeur comprend un transistor de modulation T1 commandé pour le circuit logique 14. De manière classique, en parallèle à la commande du transistor T1, le circuit 14 commande également un interrupteur 16 agencé en série avec la capacité C1 entre la diode D2 et la borne d'entrée B.

Selon l'invention, le transpondeur 12 comprend des moyens de commande additionnels 20 du transistor de modulation T1 prévu également pour la protection EDS dans le cas d'une décharge électrostatique positive. Ces moyens de commande 20 sont agencés entre le circuit redresseur et le transistor T1. De manière nullement limitative, les moyens de commande 20 sont formés par une résistance R agencée en série avec une capacité C2, située du côté de la borne B, et par un inverseur 22 dont l'entrée est reliée entre la résistance R et la capacité C2. La sortie de cet inverseur est reliée à la borne de commande 24 du transistor T1 via une porte logique « OR » 26. La deuxième entrée de cette porte logique est reliée aux moyens de commande de modulation, agencés dans le circuit logique 14, qui envoient un signal MOD pour actionner le transistor T1 via la porte logique 26.

On remarquera que la présence de l'inverseur 22 est liée en particulier à la technologie NMOS d'implémentation du transistor T1. Lorsque la borne de commande 24 reçoit un signal de tension basse, le transistor T1 est non conducteur alors qu'il devient conducteur lorsque ce signal de tension est haut.

En fonctionnement normal, les capacités C1 et C2 sont chargées et seul un faible courant passe au travers de la résistance R de sorte que le point de jonction de cette résistance à la capacité C2 présente une tension haute. L'inverseur 22 envoie alors un signal de tension basse au transistor T1, lequel est donc non conducteur en l'absence d'un signal de tension haute provenant du circuit logique 14. Par contre, en cas de décharge électrostatique positive, un fort courant électrique passe au travers de la résistance R. Ceci a pour conséquence une chute de potentiel aux bornes de cette résistance et l'inverseur 22 envoie alors un signal de tension haute. Le transistor T1 est rendu conducteur et le courant de décharge peut alors s'écouler à travers ce transistor sans endommager le circuit intégré.

L'homme du métier saura déterminer les valeurs adéquates pour R et C2 de manière à assurer efficacement la commande susmentionnée du transistor T1.

On notera finalement que le transistor T1 est particulièrement bien adapté à la protection ESD étant donné ses dimensions caractéristiques relativement grandes et son agencement en parallèle entre le circuit redresseur et le circuit logique 14 à protéger.

## Revendications

1. Transpondeur (12) comprenant une antenne (4), un circuit redresseur (D1, D2, C1), un circuit logique (14) alimenté par ce circuit redresseur et un transistor de modulation (T1) agencé entre ledit circuit redresseur et ledit circuit logique, ce transistor de modulation étant commandé par ledit circuit logique pour former des signaux de réponse du transpondeur, **caractérisé en ce qu**'il comprend des moyens de protection contre les décharges électrostatiques, ESD formés par ledit transistor de modulation (T1) et par des moyens de commande additionnels (20) de ce transistor de modulation agencés pour le mettre dans son état conducteur lorsqu'un courant de décharge électrostatique sort dudit circuit redresseur en direction dudit circuit logique.

2. Transpondeur selon la revendication 1, **caractérisé en ce que** lesdits moyens de commande additionnels (20) sont agencés entre ledit circuit redresseur et ledit transistor de modulation (T1), une porte logique OR (26) étant agencée entre ces moyens de commande additionnels et la borne de commande (24) dudit transistor de modulation, les moyens de commande additionnels envoyant un premier signal de commande à une première entrée de ladite porte logique OR et ledit circuit logique (14) étant relié à la deuxième entrée de cette porte logique à laquelle il fournit un deuxième signal de commande (MOD) pour moduler lesdits signaux de réponse.

## Claims

1. Transponder (12) including an antenna (4), a rectifier circuit (D1, D2, C1), a logic circuit (14) powered by said rectifier circuit and a modulation transistor (T1) arranged between said rectifier circuit and said logic circuit, said modulation transistor being controlled by said logic circuit to form transponder response signals, **characterized in that** it includes electrostatic discharge, ESD, protection means formed by said modulation transistor (T1) and by additional means (20) for controlling said modulation transistor arranged to put it in its non-conductive state when an electrostatic discharge leaves said rectifier circuit in the direction of said logic circuit.

2. Transponder according to claim 1, **characterized in that** said additional control means (20) are arranged between said rectifier circuit and said modulation transistor (T1), a logic OR gate (26) being arranged between said additional control means and the control terminal (24) of said modulation transistor, the additional control means sending a first control signal to a first input of said logic OR gate and said logic circuit (14) being connected to said second input of said logic gate to which it provides a second control signal (MOD) to modulate said response signals.

## Patentansprüche

1. Transponder (12), der eine Antenne (4), eine Gleichrichterschaltung (D1, D2, C1), eine durch diese Gleichrichterschaltung gespeiste Logikschaltung (40) und einen Modulationstransistor (T1), der zwischen die Gleichrichterschaltung und die Logikschaltung geschaltet ist, umfasst, wobei der Modulationstransistor durch die Logikschaltung gesteuert wird, um Antwortsignale des Transponders zu erzeugen, **dadurch gekennzeichnet, dass** er Mittel zum Schutz vor elektrostatischen Entladungen, ESD, enthält, die gebildet sind durch den Modulationstransistor (T1) und durch zusätzliche Steuermittel (20) dieses Modulationstransistors, die so beschaffen sind, dass sie diesen durchschalten, wenn die Gleichrichterschaltung ein durch eine elektrostatische Entladung bedingter Strom in Richtung der Logikschaltung verlässt.

2. Transponder nach Anspruch 1, **dadurch gekennzeichnet, dass** die zusätzlichen Steuermittel (20) zwischen die Gleichrichterschaltung und den Modulationstransistor (T1) geschaltet sind, wobei zwischen diese zusätzliche Steuermittel und den Steueranschluss (24) des Modulationstransistors ein ODER-Logikgatter (26) geschaltet ist, wobei die zusätzlichen Steuermittel ein erstes Steuersignal zu einem ersten Eingang des ODER-Logikgatters schicken und die Logikschaltung (14) mit dem zweiten Eingang dieses Logikgatters verbunden ist, an den sie ein zweites Steuersignal (MUD) liefert, um die Antwortsignale zu modulieren.
